# EUROPÄISCHE PATENTSCHRIFT

(11) **EP 2 186 758 B1**
(45) Veröffentlichungstag und Bekanntmachung des Hinweises auf die Patenterteilung: **25.07.2012**
(21) Anmeldenummer: 09172074.8
(22) Anmeldetag: 02.10.2009
(51) Int. Cl.: B65G 47/14, B65G 47/57

(54) **Transporteur**
Transporter
Transporteur

(30) Priorität: 18.11.2008 DE 102008057901
(43) Veröffentlichungstag der Anmeldung: 19.05.2010
(73) Patentinhaber: Krones AG, 93073 Neutraubling (DE)
(72) Erfinder: Buchhauser, Klaus, 93180, Deuerling (DE); Sickert, Tino, D-01157 Dresden (DE)
(74) Vertreter: Grünecker, Kinkeldey, Stockmair & Schwanhäusser

(56) Entgegenhaltungen:
- EP-A1- 1 072 513
- GB-A- 2 085 417

## Beschreibung

Die Erfindung betrifft einen Transporteur der im Oberbegriff des Patentanspruchs 1 angegebenen Art.

Bei dem aus EP 1 486 438 A bekannten Transporteur, entsprechend dem Oberbegriff von Anspruch 1, beispielsweise für zylindrische Behälter (Zahnpastatuben), eilen die außenliegenden Enden der Mitnehmer gegenüber den innenliegenden Wurzelbereichen am Förderelement in Förderrichtung nach, wenn jeder Mitnehmer in den Mündungsbereich der Zuführstrecke einfährt. Um jeweils nur einen Behälter zuverlässig abzusondern und in eine Tasche zwischen zwei aufeinanderfolgenden Mitnehmern einzubringen, sind zwei taktweise gesteuerte Elemente vorgesehen, die den jeweils vordersten Behälter der Reihe absondern, erst freigeben, nachdem ein Mitnehmer vorbeipassiert hat, und gleichzeitig die anstehende Reihe gegen Nachrollen zurückhalten.

Bei dem aus GB 2 137 155 A bekannten Transporteur sind zwar die Mitnehmer am Förderelement elastisch ausgebildet, jedoch ohne jegliche Voreilung der außenliegenden Enden der Mitnehmer gegenüber ihren Mittelbereichen am Förderelement und in Förderrichtung. Die Förderrichtung ist im Übrigen im Mündungsbereich der Zuführstrecke nach oben orientiert.

Bei dem aus FR 2 754 798 A bekannten Transporteur für zylindrische Objekte, die in einer kontinuierlichen Reihe angeliefert werden, ist im Mündungsbereich der Zuführstrecke ein Verteilerstern angeordnet, der zusammen mit einem Anschlag in der Zuführstrecke jeweils den vordersten Behälter der Reihe absondert und zur in Förderrichtung hintenliegenden Seite jedes Mitnehmers verlagert, so dass der Mitnehmer von der Aufgabe der Absonderung jedes vordersten Behälters freigestellt bleibt.

Bei dem aus EP-A-1072513 bekannten Transporteur für Behälterverschlüsse ist der Endlos-Steigförderer ein Kettenförderer, an dessen Förderelementen L-förmige, starre Mitnehmer jeweils mit dem kürzeren L-Schenkel so angebracht sind, dass der längere L-Schenkel in etwa senkrecht von der Außenseite des Förderelements absteht. Die Zuführstrecke liefert die Behälterverschlüsse liegend entweder mit dem Behälterverschluss-Boden oder mit der Behälterverschluss-Öffnung nach unten an die Taschen, so dass jeweils ein Behälterverschluss direkt mit dem Boden oder der Öffnung auf dem längeren L-Schenkel eines Mitnehmers abgelegt wird. Die Behälterverschlüsse werden in der Zuführstrecke mit einer Bewegungskomponente nach unten geliefert, während die Mitnehmer am Mündungsbereich der Zuführstrecke mit einer Bewegungskomponente nach oben vorbeilaufen. Dabei wird das Förderelement stromab der unteren Umlenkeinrichtung abgelenkt, so dass die Umlaufbahn der äußeren Enden der Mitnehmer in etwa senkrecht zur Lieferrichtung in der Zuführstrecke verläuft. Im oben liegenden Abführbereich wird jeder Behälterverschluss durch eine Luftdüse seitlich aus der Tasche in einen Sammelkanal einer seitlichen Abführstation geblasen, aus dem der Behälterverschluss in ein Rohr fällt. Da die Übergabe jedes Behälterverschlusses aus der Zuführstrecke in eine Tasche mit einer Bewegungskomponente des Behälterverschlusses nach unten bei einer gleichzeitigen Bewegungskomponente des Mitnehmers nach oben in einem sehr kleinen Zeitfenster erfolgt, erfährt der Behälterverschluss eine starke Richtungsumkehr mit einer Kraftspitze, die zu einer kurzzeitigen Verzögerung und der Gefahr eines Einklemmens führt. Dieser Nachteil wird durch den starren Mitnehmer verstärkt.

Bei der aus DE-A-10003475 bekannten Vorrichtung zum dynamischen Speichern von beispielsweise Behälterverschlüssen sind die am Förderelement angeklebten oder eingeklinkten Mitnehmer ebene, viereckige Paletten aus starrem Kunststoff, Blech oder starre Drahtbügel.

Bei einer aus WO-2007/144257 A bekannten Transportvorrichtung für Behälterverschlüsse werden die Behälterverschlüsse auf den Spitzen von Borsten gefördert, die einen Förderkanal stationär oder mitlaufend begrenzen.

Ein Problem bekannter Transporteure für Behälterverschlüsse resultiert aus der starren Befestigung der Mitnehmer an dem Förderelement. Dadurch ist die Zuteilung der Behälterverschlüsse zu den Taschen ein kritischer Vorgang, wenn die Behälterverschlüsse in einer einzelnen Reihe ohne Zwischenabstände angeliefert werden. Es treten häufig Störungen durch einen eingequetschten oder eingeklemmten Behälterverschluss auf, was zur Zerstörung des Behälterverschlusses und/oder zu einer Störung in der Weiterverarbeitung der Behälterverschlüsse führt. Diese Störungen resultieren aus der Verwendung starrer mechanischer Mitnehmer, hoher Geschwindigkeitsdifferenzen zwischen dem Förderelement und der Zuführstrecke, den gegenläufigen Geschwindigkeitsvektoren des Förderelements und der Behälterverschlüsse bei der Übergabe, und der starken Richtungsumkehr im Moment des Einbringens eines Behälterverschlusses in eine Tasche.

Aus GB 2 085 417 A, Figuren 8 bis 13, ist ein Transporteur für in einem Pulk ineinander verhängte Komponenten wie Schraubenfedern bekannt, die aus der schräg abwärts geneigten Zuführstrecke zu dem im Mündungsbereich der Zuführstrecke schräg nach oben bewegten Förderelement eines Steigförderers gebracht werden. Auf dem Förderelement sind querliegende Stege als Mitnehmer befestigt, die in Förderrichtung elastisch sind und die Komponenten einzeln aus dem Pulk lösen und mitnehmen sollen. Die im Mündungsbereich der Zuführstrecke zu den Mitnehmern nach unten gerichtete Bewegungskomponente des Pulks, die dort nach oben gerichtete Förderbewegung der Mitnehmer und deren Elastizität in Förderrichtung lösen im Zusammenspiel mit Luftstrahlen aus im Mündungsbereich quer angeordneten Luftdüsen den Pulk auf. Für in einer geordneten Reihe angelieferte Behälterverschlüsse ist dieses Prinzip wegen akuter Staugefahr in Folge gegensinniger Bewegungskomponenten im Mündungsbereich der Zuführstrecke nicht geeignet.

Der Erfindung liegt die Aufgabe zugrunde, einen Transporteur der eingangs genannten Art dahingehend zu verbessern, dass die Behälterverschlüsse beim Einführen in die Taschen zuverlässig vereinzelt und schonend behandelt werden, und dass sich eine zuverlässige Aufnahme und Abgabe der Behälterverschlüsse ohne Förderstaus oder Beschädigungen erzielen lassen.

Die gestellte Aufgabe wird mit den Merkmalen des Patentanspruchs 1 gelöst.

Da der Mitnehmer bei gegebenenfalls eintretender Kontaktaufnahme elastisch verformbar und/oder verlagerbar ist, wird ein zum Verharren neigender Behälterverschluss zuverlässig und ohne Gefahr einer Beschädigung aus der Reihe gelöst und in eine Tasche überführt. Der Mitnehmer kann hierbei ausweichen und erleichtert die Überführung des Behälterverschlusses. Der Mitnehmer sticht sozusagen den vordersten Behälterverschluss der gelieferten Reihe von der Reihe ab und überführt ihn in die Tasche. Diese vorteilhafte Wirkung der Mitnehmer tritt nicht nur zuverlässig bei kontinuierlichem Dauerbetrieb ein, sondern auch nach einem aus irgendwelchen anderen Gründen bedingten Betriebsstopp bei neuerlichem Anlaufen des Förderelements. Ein Grund für kaum noch auftretende Störungen liegt vermutlich darin, dass infolge der Förderbewegung des Förderelements und den zustrebenden Behälterverschlüssen auftretende Kräfte zwischen dem Mitnehmer und dem Behälterverschluss durch die rückstellende Elastizität des Mitnehmers ohne Schaden geschluckt werden, d.h., der Mitnehmer solche kritischen Zustände sehr leicht verzeiht. Bei normaler Überführung eines leichtgängig in die Tasche strebenden Behälterverschlusses braucht der Mitnehmer ohnedies nicht unbedingt einzugreifen. Die Übergabe jedes Behälterverschlusses aus der Zuführstrecke an den Mitnehmer wird dadurch verbessert, dass die Förderrichtung des Förderelements zumindest im Mündungsbereich der Zuführstrecke nach unten weist. Kraftspitzen und gegensinnige Bewegungskomponenten werden so zwischen den Behälterverschlüssen und den Mitnehmern bei der Übergabe vermieden, weil die Behälterverschlüsse und das Förderelement dort gleichsinnige Bewegungskomponenten oder Bewegungsvektoren haben, wodurch jeder Behälterverschluss sehr leicht in die Tasche gelangt, selbst wenn eine hohe Fördergeschwindigkeit eingestellt ist. Ein wichtiger Gesichtspunkt besteht darin, dass das äußere Ende jedes Mitnehmers in nicht verlagertem und/oder verformtem Zustand des Mitnehmers gegenüber einem beim, am oder im Förderelement liegenden Wurzelbereich des Mitnehmers in Förderrichtung voreilt, d.h., dass der Mitnehmer am Förderelement abweichend von einer zur Außenseite senkrechten Lage in Förderrichtung geringfügig schräggestellt ist. Diese Voreilung der äußeren Enden der oder die Schrägstellung der Mitnehmer in Förderrichtung begünstigt eine gegebenenfalls notwendige Abstichwirkung beim Absondern des vordersten Behälterverschlusses aus der unterbrechungsfreien Reihe gelieferter Behälterverschlüsse.

Vorteilhaft ist dabei, insbesondere wenn auf die Transporteinrichtung folgend vor einer weiteren Verarbeitungsstation für die Verschlüsse eine Sammelrinne vorhanden ist, dass nicht zwingend jede Tasche mit einem Verschluss belegt sein muss. Die Funktion der Transporteinrichtung wird dadurch in keiner Weise beeinträchtigt.

Hierbei ist es wichtig, wenn die Zuführstrecke von oben unter einem spitzen Winkel < 90° zu einer Tangente an die Laufbahn der äußeren Enden der Mitnehmer verläuft, so dass die Behälterverschlüsse sozusagen wie in einer Schienenweiche schonend und gleichförmig in die Taschen überführt werden.

Zweckmäßig beträgt dieser Winkel zwischen ca. 30° und 60°, vorzugsweise etwa 45°. Die Laufbahn der äußeren Enden der Mitnehmer kann im Mündungsbereich der Zuführstrecke im Wesentlichen gerade sein. Eine zusätzliche Umlenkung des Förderelements wird somit für die Übergabe nicht benötigt.

Bei einer günstigen Ausführungsform besitzt die Zuführstrecke einen zur Ebene des Endlos-Steigförderers in etwa parallelen Boden und beiderseitige Führungen, wobei die Behälterverschlüsse, vorzugsweise in nur einer einzigen Orientierung, liegend in die Taschen geliefert werden, derart, dass dann jeder in eine Tasche überführte Behälterverschluss mit seiner runden Umfangswand zu zwei benachbarten Mitnehmern weist.

Die Voreilung wird zweckmäßig mit einer Schräglage mit einem spitzen Winkel des Mitnehmers gegenüber seinem Wurzelbereich eingestellt.

Bei zum Förderelement in Förderrichtung geringfügig schräg gestellten Mitnehmern (jeweils in deren unverformtem Zustand) kann zweckmäßig entweder eine Achse des Endlos-Steigförderers nach oben zur Seite der Zuführstrecke schräg gestellt sein, oder wird das Förderelement abschnittsweise gegenüber einer Vertikalen in Förderrichtung schräg abgelenkt. Mit diesen einfach zu realisierenden Maßnahmen lässt sich die Zusammenwirkung zwischen den elastischen Mitnehmern und dem Behälterverschlüssen weiter verbessern. Die BehälterVerschlüsse treten dann noch leichter in Taschen ein oder aus den Taschen aus.

Vorteilhaft ist dabei, insbesondere wenn auf die Transporteinrichtung folgend vor einer weiteren Verarbeitungsstation für die Verschlüsse eine Sammelrinne vorhanden ist, so dass nicht zwingend jede Tasche mit einem Verschluss belegt sein muss. Die Funktion der Transporteinrichtung wird dadurch in keiner Weise beeinträchtigt.

Hierbei ist es wichtig, wenn die Zuführstrecke von oben unter einem spitzen Winkel < 90° zu einer Tangente an die Laufbahn der äußeren Enden der Mitnehmer verläuft, so dass die Behälterverschlüsse sozusagen wie in einer Schienenweiche schonend und gleichförmig in die Taschen überführt werden. Zweckmäßig beträgt dieser Winkel zwischen ca. 30° und 60°, vorzugsweise etwa 45°. Die Laufbahn der äußeren Enden der Mitnehmer kann im Mündungsbereich der Zuführstrecke im Wesentlichen gerade sein. Eine zusätzliche Umlenkung des Förderelements wird somit für die Übergabe nicht benötigt.

Bei einer zweckmäßigen Ausführungsform ist der Mitnehmer eine Platte aus elastisch verformbarem Material, vorzugsweise Gummi oder einem Elastomer, wie z. B. Polyurethan, beispielsweise mit einer Shore-Härte zwischen etwa 40 bis 90, vorzugsweise etwa 60 bis 70, oder aus einem Federstahlblech.

Die Platte aus elastisch verformbarem Material kann im Wurzelbereich des Mitnehmers am Förderelement festgeklebt sein. Eine Befestigung in jeglicher kraft-, stoff- oder formschlüssiger Verbindung ist einsetzbar.

Die Platte aus dem verformbaren Material hat dann eine Stärke von etwa 3 bis 7 mm, vorzugsweise 4 bis 6 mm, wobei sich die gewählte Stärke nach der Größe und/oder Masse und/oder Form der Behälterverschlüsse zu richten hat, und für normale Schraubkappen andere Voraussetzungen gelten als beispielsweise für sogenannte Sportverschlüsse.

Die Platte kann bei einer anderen Ausführungsform im Wurzelbereich an einem am Förderelement festgelegten Widerlager lösbar angebracht werden, vorzugsweise an einem am Förderelement festgeklebte Noppen, beispielsweise aus Hartgummi, verschraubt, verstiftet oder vernietet oder eingeklinkt sein. Ein solcher Noppen kann auch zum Ankleben der Platte aus elastisch verformbarem Kunststoff- oder Gummi-Material benutzt werden.

Zweckmäßig ist zur Verarbeitung unterschiedlich dimensionierter Behälterverschlüsse mit dem Transporteur die Weite und/oder der Liefer-Winkel der Zuführstrecke verstellbar.

Der Abführbereich für die transportierten Behälterverschlüsse kann analog zur Zuführstrecke und umgekehrt wie diese ausgebildet und in Förderrichtung hinter der oberen Umlenkeinrichtung platziert sein, so dass zum Abführen der Behälterverschlüsse mit einer zur Förderrichtung gleichsinnigen Bewegungskomponente aus den Taschen die Schwerkraft nutzbar ist, und die elastische Verformbarkeit oder Verlagerbarkeit der Mitnehmer auch den Abführvorgang bei Bedarf so unterstützt, dass Störungen vermieden werden.

Bei einer zweckmäßigen Ausführungsform ist das Förderelement ein Zahnriemen mit im Wesentlichen ebener Außenseite. Die Verzahnung an der Innenseite des Zahnriemens lässt die Antriebskraft optimal in das Förderelement einbringen.

Schließlich sollte zumindest die Behälterverschluss-Transportlänge des Endlos-Steigförderers Abdeckungen an den offenen Seiten und den offenen Außenseiten der Taschen aufweisen, so dass bei nicht exakt vertikaler Anstellung der Ebene des Endlos-Steigförderers jeder Behälterverschluss entweder mit seiner offenen Seite oder mit seinem Boden auf der Abdeckung gleitet, während er vom Mitnehmer am Umfangsbereich transportiert wird.

Eine Ausführungsform des Erfindungsgegenstandes wird anhand der Zeichnungen erläutert. Es zeigen:
- Fig. 1: eine schematische Seitenansicht eines Behälterverschluss-Sortierwerks mit einem Transporteur,
- Fig. 2: eine Perspektivansicht von Hauptbestandteilen des Sortierwerks und des Transpor- teurs,
- Fig. 3: eine Draufsicht auf den Transporteur,
- Fig. 4: eine Detailvariante in schematischer Darstellung,
- Fig. 5: eine weitere Detailvariante in schematischer Darstellung und Seitenansicht,
- Fig. 6: eine weitere Detailvariante in schematischer Seitenansicht,
- Fig. 7: eine weitere Seitenansicht einer Detailvariante, und

- Fig. 8: eine Perspektivdarstellung eines Ausschnitts einer weiteren Ausführungsform eines Transporteurs.

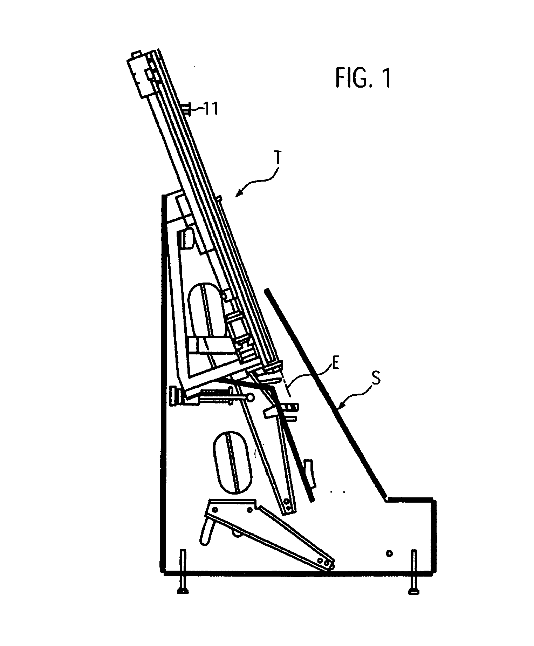

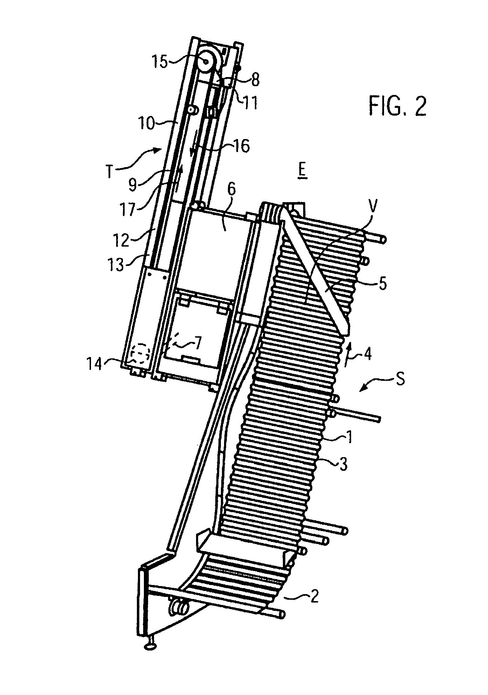

In Behälterbehandlungsmaschinen der Getränke-Abfüll-Industrie oder in Behälterverschluss-Systemen ist es häufig erforderlich, die als Stückgut mit zufälligen Orientierungen vorliegenden Behälterverschlüsse in eine einzige Orientierung zu sortieren, und die sortierten Behälterverschlüsse im Verfahrensablauf in der jeweiligen Maschine zu bestimmten Höhenpositionen nach oben zu fördern. Hierbei ist es bekannt, sich eines Sortierwerks S mit funktionell damit zusammenarbeitendem Transporteur G gemäß den Fig. 1 und 2 zu bedienen.

Das Sortierwerk S enthält beispielsweise ein Mattenband 1 mit quer liegenden leistenförmigen Mitnehmern 3 und entnimmt die zunächst in zufälligen Orientierungen vorliegenden Behälterverschlüsse V aus einem unten liegenden Reservoir 2. Durch einen allmählich steiler nach oben strebendem Verlauf des Mattenbandes 1 wird jeder Behälterverschluss V durch Schwerkrafteinfluss unter Nutzen seiner in Behälterhöhenrichtung außermittigen Schwerpunktlage in die richtige Orientierung gebracht. Beispielsweise liegt jeder Behälterverschluss V mit dem Verschlussboden in einer Tasche auf einem Förderelement 3, sodass die offene Seite des Behälterverschlusses nach außen weist. Kommt ein Behälterverschluss V in umgekehrter Orientierung zu liegen, dann fällt er aufgrund der Steigung des Mattenbandes 1 selbsttätig wieder herab, bis er in der richtigen Orientierung zu liegen kommt. Das Mattenband 3 wird in Förderrichtung 4 angetrieben. Die ordnungsgemäß orientierten Behälterverschlüsse V werden beispielsweise durch einen schrägen Abweiser 5 zu einem flächigen Pufferspeicher 6 des Transporteurs T ausgeschoben und aus dem Pufferspeicher 6 über eine schräg nach unten verlaufende Zuführstrecke 7 in den Transporteur T eingeführt.

Der Transporteur T ist beispielsweise ein Endlos-Steigförderer 9 mit einem Förderelement 10, beispielsweise einem Zahnriemen, das über untere und obere Umlenkeinrichtungen 14, 15 läuft und so angetrieben ist, dass das in Fig. 2 rechte Trum mit einer Förderrichtung 16 nach unten läuft, hingegen das in Fig. 2 linke Trum in Förderrichtung 17 nach oben. Der obere Abschnitt des Mattenbandes 1 des Sortierwerks S und der Transporteur T liegen beispielsweise in einer gemeinsamen Ebene E, die unter relativ steilem Winkel angestellt ist. Das Förderelement 10 läuft somit in Förderrichtung 16 nach unten zur Förderstrecke 7, übernimmt die in einer kontinuierlichen Reihe in der Förderstrecke 7 angelieferten Behälterverschlüsse V einzeln, fördert diese um die untere Umlenkrichtung 14 und dann nach oben zur oberen Umlenkeinrichtung 15, und führt diese in einem Abführbereich 11 vereinzelt zur weiteren Verarbeitung ab, wobei die Behälterverschlüsse V im Abführbereich 11 durch ein Ausleitblech 8 ausgeleitet werden. Der Abführbereich 11 kann durch eine Abdeckung (nicht gezeigt) abgedeckt sein. Wie anhand der weiteren Figuren erläutert wird, sind am Förderelement 10 einzelne, durch je zwei beabstandete Mitnehmer M begrenzte Taschen 18 zum Fördern der Behälterverschlüsse V vorgesehen, wobei die Taschen nach außen und nach vorne und hinten offen sein können. Entsprechende Abdeckungen 12, 13 zumindest entlang der Förderlänge des Endlos-Steigförderers 9 verhindern das Herausfallen der geförderten Behälterverschlüsse V.

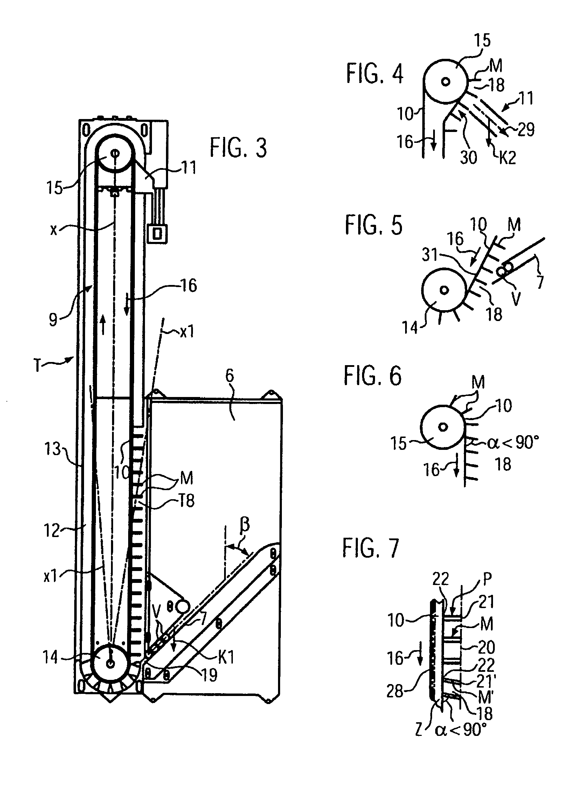

Fig. 3 zeigt in einer Draufsicht, dass der Transporteur T bzw. dessen Endlos-Steigförderer 9 mit einer die oberen und unteren Umlenkeinrichtungen 14, 15 enthaltenden Achse X exakt vertikal angeordnet ist. Als strichpunktierte Alternative ist in Fig. 3 auch eine Ausführungsform angedeutet, in der die die oberen und unteren Umlenkeinrichtungen 15, 14 enthaltende Achse X1 von unten nach oben zu der Seite geringfügig schräg gestellt ist, an der die Zuführstrecke 7 und auch der Abgabebereich 11 positioniert sein können.

Auf dem Förderelement 10 sind an dessen Außenseite die in Fig. 3 in etwa senkrecht zur Außenseite abstehenden Mitnehmer M angeordnet, die in einer im Wesentlichen regelmäßigen Teilung die aufeinander folgenden Taschen 18 zum Fördern der Behälterverschlüsse V definieren. Der Pufferspeicher 6 enthält bei der gezeigten Ausführungsform Leitelemente, die die Zuführstrecke 7 definieren, die unter einem Winkel β schräg nach unten zu den vorbeilaufenden Taschen 18 (Mündungsbereich 19) orientiert ist, sodass die Behälterverschlüsse V entlang der Zuführstrecke 7 unter Schwerkrafteinfluss (gegebenenfalls unterstützt durch Drucklufteinfluss) eine Lieferbewegung mit einer zur Förderrichtung 16 gleichsinnigen Bewegungskomponente K1 ausführen. Bei einer nicht gezeigten Alternative könnten die Behälterverschlüsse V vom Sortierwerk S oder ohne Sortierwerk direkt entlang einer nicht gezeigten Rinne in einer einzelnen kontinuierlichen Reihe geliefert werden, wobei diese Rinne dann die Zuführstrecke 7 von Fig. 3 ersetzt oder in diese mündet.

Die Weite der Zuführstrecke 7 kann zum Verarbeiten unterschiedlich großer Behälterverschlüsse V variabel sein, wie auch der Winkel β. Der Winkel β beträgt in der gezeigten Ausführungsform etwa 45° zu einer Tangente 20 (Fig. 7) an die Umlaufbahn der äußeren Enden der Mitnehmer M im Übergabebereich. Der Winkel β beträgt jedoch zweckmäßig zwischen etwa 30° und 60° und könnte variabel sein.

Jeder Mitnehmer M (Fig. 7) an der Außenseite des Förderelementes 10 besitzt ein freies Ende 21 und einen Wurzelbereich 22, in welchem der Mitnehmer M mit dem Förderelement 10 verbunden ist. Das Förderelement 10 ist beispielsweise ein Zahnriemen Z mit einer im Wesentlichen ebenen Außenseite und einer Verzahnung 28 an der Innenseite.

Im unteren Teil von Fig. 7 ist eine weitere Ausführungsform angedeutet, bei der die Mitnehmer M' unter einem Winkel α < 90° in Förderrichtung 16 abweichend von einer vertikalen Lage relativ zur Außenseite des Förderelementes 10 schräggestellt sind, derart, dass jedes außen liegende Ende 21' in Förderrichtung 16 gegenüber dem Wurzelbereich 22 voreilt.

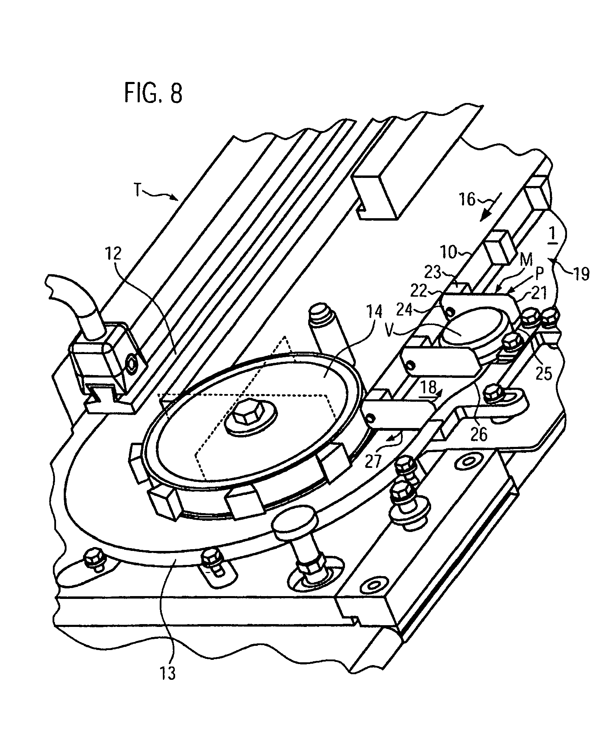

Jeder Mitnehmer M ist beispielsweise eine im Wesentlichen ebene Platte P aus einem elastisch verformbaren und/oder elastisch verlagerbaren Material wie Gummi oder einem Elastomer wie Polyurethan, beispielsweise mit einer Shore-Härte zwischen etwa 40 bis 90, vorzugsweise etwa zwischen 60 bis 70 Shore. Die Platte P kann im Wurzelbereich 22 an das Förderelement 10 angeklebt oder anvulkanisiert sein. Alternativ kann die Platte P aus einem Federstahlblech bestehen, das entweder angeklebt oder (Fig. 8) an einem Widerlager 23, z. B. einem aufgeklebten Gumminoppen, mittels wenigstens einer Schraube 24 lösbar oder austauschbar festgelegt ist. Diese Befestigungsweise kann auch für Platten aus elastisch verformbarem und/oder elastisch verlagerbarem Material benutzt werden. Alternativ könnte die Platte P auch an dem Widerlager 23 seitlich angeklebt sein.

Ein erfindungswesentliches Merkmal der Mitnehmer M gemäß der Erfindung besteht darin, dass diese zumindest in der und gegen die Förderrichtung 16 elastisch rückstellend verformbar und/oder verlagerbar sind, wie dies durch einen Doppelpfeil 27 in Fig. 8 angedeutet ist. Die Elastizität des Mitnehmers M ermöglicht es gegebenenfalls ferner, dass dieser bei einer Stauchung nachgibt oder sich in begrenztem Ausmaß verdrehen lässt, wenn er bei einem ungünstigen Kontakt mit einem Behälterverschluss V einer Kraft unterworfen wird.

Fig. 4 verdeutlicht eine Detailvariante, bei der das Förderelement 10 nach Ablaufen von der oberen Umlenkeinrichtung 15 über einen Abschnitt 30 gegenüber einer Vertikalen schräg mit der Förderrichtung 16 laufend umgelenkt wird, beispielsweise beim Abgabebereich 11, um das Austreten der Behälterverschlüsse V aus den Taschen unter Schwerkrafteinfluss und/oder Druckluftunterstützung zu begünstigen, wobei die abgegebenen Behälterverschlüsse in einer Abgaberichtung 29 weiter rutschen, in der sie eine zur Förderrichtung 16 nach unten gleichsinnige Bewegungskomponente K2 haben. Die Schrägstellung im Abschnitt 30 hat einen ähnlichen Effekt wie die Schrägstellung der Achse X1 in Fig. 3.

Fig. 5 verdeutlicht eine andere Detailvariante, bei der das Förderelement 10 in einem Abschnitt 31 vor dem Auflaufen auf die untere Umlenkeinrichtung 14 gegenüber einer Vertikalen mit einer schrägen Förderrichtung 16 laufend abgelenkt ist, damit die in dieser Ausführungsform senkrecht zur Außenseite des Förderelementes 10 stehenden Mitnehmer M die Behälterverschlüsse V leichter aus der gelieferten Reihe lösen und mitnehmen können. Der Effekt der in Fig. 5 gezeigten abschnittsweise in Schrägstellung ist ähnlich wie der der schräggestellten Achse X1 in Fig. 3. Alternativ (nicht gezeigt) könnte der Abschnitt 31 in Fig. 5 umgekehrt schräg laufen, damit die Behälterverschlüsse V mit der Bewegungskomponente K1 noch leichter in die Taschen 18 rollen.

Die Ausführungsform in Fig. 6 entspricht dem unteren Teil von Fig. 7, das heißt die Mitnehmer M sind am Förderelement 10 mit dem Winkel α < 90° in Förderrichtung 16 schräggestellt. Damit wird ein ähnlicher Effekt bei vertikalem Lauf des Förderelementes 10 erzielt, wie durch die Schrägstellung der Achse X1 in Fig. 3 oder durch die schrägen Abschnitte 30, 31 in den Fig. 4 und 5.

Die Platte P (Fig. 7) aus dem elastisch verformbaren und/oder elastisch verlagerbaren Material (Gummi oder einem Elastomer) hat beispielsweise eine Stärke von etwa 3 bis 7 mm, vorzugsweise 4 bis 6 mm. Das außen liegende Ende 21 kann durch eine Fläche definiert sein, wobei gegebenenfalls die oberen und unteren Ecken der Platte P (Fig. 8) abgerundet sind. Die Stärke der Platte P kann in Richtung zum freien Ende 21 hinzunehmen oder abnehmen oder, wie gezeigt, konstant sein.

Fig. 8 zeigt in der Perspektivdarstellung (gegebenenfalls vorgesehene Abdeckteile bei der unteren Umlenkeinrichtung 14 sind der besseren Übersichtlichkeit halber entfernt) einen bereits in eine Tasche 18 ordnungsgemäß eingetretenen Behälterverschluss V, der aus dem Mündungsbereich 19 der Zuführstrecke 7 übernommen wurde. Normalerweise treten die Behälterverschlüsse V ohne nennenswerten Kontakt mit den Mitnehmern M in die Taschen 18 ein. Sollte es aus irgendwelchen Gründen zu einer Tendenz kommen, bei der ein Behälterverschluss V mit der Bewegungskomponente K1 und durch Leitelemente 25, 26 nicht selbsttätig in die Tasche 18 eintritt, sondern mit dem freien Ende 21 eines Mitnehmers M in Kontakt tritt, dann gibt der Mitnehmer M elastisch nach, wobei er den Behälterverschluss V entweder schonend in die Tasche 18 drückt oder über ihn hinwegschnappt, sodass dieser in die nächstfolgende Tasche 18 eintritt und ein Zuführstau vermieden wird. Danach stellt sich der Mitnehmer M elastisch wieder in seine Ausgangslage, sodass auch nachfolgende Behälterverschlüsse V wieder ordnungsgemäß überführt werden.

Der Abgabebereich 11 ist zweckmäßig im Wesentlichen analog zur Zuführstrecke 7 ausgebildet, jedoch umgekehrt, sodass die Behälterverschlüsse V aus den Taschen 18 mit der mit der Förderrichtung 16 nach unten gleichsinnigen Bewegungskomponente K2 und unter Schwerkrafteinfluss (gegebenenfalls unterstützt durch Druckluft) leicht austreten. Sollte ein Behälterverschluss V aus irgendwelchen Gründen nicht selbsttätig vollständig aus der Tasche 18 austreten, dann gibt der schiebende Mitnehmer M nach, bis ohne einen dauerhaften Stau der Behälterverschluss V ordnungsgemäß ausgeschoben ist, oder nach dem Überschnappen des Mitnehmers M austritt.

Wenn die Mitnehmer M schräggestellt sind (Fig. 6 und Fig. 7, unterer Teil), oder die Achse X1 schräggestellt ist bzw. die Abschnitte 30, 31 schräggestellt sind, ergibt sich z. B. im Mündungsbereich 19 der Zuführstrecke 7 eine Abstichwirkung, mit der jeder Mitnehmer M mit seinem freien Ende 21 den vordersten Behälterverschluss V aus der Reihe absticht und in die Tasche 18 zwingt, falls der Behälterverschluss V nicht selbsttätig eintritt. Dabei werden die Behälterverschlüsse V sehr schonend behandelt, da die Elastizität der Mitnehmer M verzeihend wirkt und die Staugefahr beseitigt. Im Abführbereich 11 sollen die Behälterverschlüsse V dann ebenfalls leichter aus den Taschen 18, und zwar wegen der Schrägstellung (α, X1, 30).

Die Abstichwirkung kann ebenso in einfacher Weise verbessert werden, indem die Mitnehmer M gegenüber dem Transportriemen 10 in einem voraus eilenden Winkel <90° montiert werden. Dies bringt den Vorteil, dass die Behälterverschlüsse V während des vertikalen Transportes in einer vorbestimmten Position zwischen Mitnehmer M und Transportriemen 10 in ihrer Lage fixiert werden. Dadurch kann eine Behälterverschlussinspektion (zum Beispiel Formabweichungen, Farbe, Abmaße, Beschädigungen) an einer vorbestimmten Stelle des vertikalen Transportes auf einfache Weise vorgenommen werden und ungeeignete Behälterverschlüsse ausgeworfen werden.

## Patentansprüche

1. Transporteur (T) für Behälterverschlüsse (V), mit einem in einer ansteigenden Ebene (E) platzierten Endlos-Steigförderer (9), an dessen über untere und obere Umlenkeinrichtungen (14, 15) laufendem Förderelement (10) an der Außenseite zumindest im Wesentlichen senkrecht zum Förderelement abstehende Mitnehmer (M, M') mit im Wesentlichen regelmäßiger Teilung angeordnet sind, die Taschen (18) für Behälterverschlüsse (V) definieren, wenigstens einer Behälterverschlüsse (V) in einer Reihe mit einer Bewegungskomponente (K1) nach unten zu den Taschen (18) liefernden Zuführstrecke (7), deren Mündungsbereich (19) nahe der unteren Umlenkeinrichtung (14) liegt, wobei die Förderrichtung (16) des Förderelementes (10) im Mündungsbereich (19) der Zuführstrecke (7) nach unten gerichtet ist, und wenigstens einem Abführbereich (11) oberhalb der Zuführstrecke (7), **dadurch gekennzeichnet, dass** jeder Mitnehmer (M, M') aus der zumindest in etwa zur Außenseite des Förderelements (10) senkrechten Lage zumindest in der und/oder gegen die Förderrichtung (16) und relativ zum Förderelement (10) elastisch rückstellend verlagerbar und/oder verformbar ist, und dass jeder Mitnehmer (M, M') zumindest im Mündungsbereich (19) der Zuführstrecke (7) zum Absondern des vordersten Behälterverschlusses (V) aus der von der Zuführstrecke (7) unterbrechungsfrei gelieferten Reihe Behälterverschlüsse (V) mit einer Abstichwirkung mit seinem außenliegenden Ende (21, 21') in Förderrichtung (16) gegenüber seinem Wurzelbereich (22) voreilt.

2. Transporteur nach Anspruch 1, **dadurch gekennzeichnet, dass** der Mitnehmer (M') am Förderelement (10) in Förderrichtung (16) mit einem spitzen Winkel (α) schräg steht, derart, dass das äußere Ende (21') des Mitnehmers (M') in nicht verlagertem und/oder verformtem Zustand des Mitnehmers (M') gegenüber dem beim, am oder im Förderelement (10) liegenden Wurzelbereich (22) des Mitnehmers (M') in Förderrichtung (16) voreilt.

3. Transporteur nach Anspruch 1, **dadurch gekennzeichnet, dass** eine die Umlenkeinrichtungen (14, 15) enthaltende Achse (X1) des Endlos-Steigförderers (9) von unten nach oben zu der Seite gegenüber einer Vertikalen schräggestellt ist, an der zumindest die Zuführstrecke (7) zum Endlos-Steigförderer (9) angeordnet ist.

4. Transporteur nach Anspruch 1, **dadurch gekennzeichnet, dass** das Förderelement (10) zumindest abschnittsweise und im Mündungsbereich (19) der Zuführstrecke (7), und gegebenenfalls im Abführbereich (11), gegenüber einer Vertikalen in Förderrichtung (16) schräglaufend abgelenkt wird.

5. Transporteur nach Anspruch 1, **dadurch gekennzeichnet, dass** die Zuführstrecke (7) von oben unter einem spitzen Winkel (β < 90°) zu einer Tangente (20) an die Laufbahn der äußeren Enden (2, 21') der Mitnehmer (M, M') verläuft, wobei der Winkel (β) zwischen 30° bis 60°, vorzugsweise etwa 45°, beträgt.

6. Transporteur nach wenigstens einem der vorhergehenden Ansprüche, **dadurch gekennzeichnet, dass** der Mitnehmer (M, M') eine an sich weitgehend ebene Platte (P) aus elastisch verformbarem Material, vorzugsweise Gummi, einem Elastomer wie z.B. Polyurethan, jeweils mit einer Shore-Härte zwischen etwa 40 bis 90, vorzugsweise etwa zwischen 60 bis 70, oder aus einem Federstahlblech ist.

7. Transporteur nach Anspruch 6, **dadurch gekennzeichnet, dass** die Platte (P) im Wurzelbereich (22) des Mitnehmers (M, M') am Förderelement (10) festgeklebt ist.

8. Transporteur nach Anspruch 7, **dadurch gekennzeichnet, dass** die Platte (P) aus elastisch verformbarem Material eine Stärke von etwa 3 mm bis 7 mm, vorzugsweise 4 mm bis 6 mm, hat.

9. Transporteur nach Anspruch 7, **dadurch gekennzeichnet, dass** die Platte (P) im Wurzelbereich (22) an einem am Förderelement (10) festgelegten Widerlager lösbar festgelegt ist, vorzugsweise an einem am Förderelement festgeklebten Noppen (32) verschraubt, verstiftet, vernietet oder eingeklinkt ist.

10. Transporteur nach wenigstens einem der vorhergehenden Ansprüche, **dadurch gekennzeichnet, dass** die Weite und/oder der Winkel (β) der Förderstrecke (7) verstellbar ist bzw. sind.

11. Transporteur nach wenigstens einem der vorhergehenden Ansprüche, **dadurch gekennzeichnet, dass** der Abführbereich (11) analog zur und umgekehrt wie die Zuführstrecke (7) ausgebildet und in Förderrichtung (16) hinter der oberen Umlenkeinrichtung (15) platziert ist, derart, dass die Behälterverschlüsse (V) unter Schwerkraft und/oder mit Druckluft-Unterstützung mit einer zur dort nach unten orientierten Förderrichtung (16) gleichsinnigen Bewegungskomponente (K2) aus den Taschen (18) abgeführt werden.

12. Transporteur nach Anspruch 1, **dadurch gekennzeichnet, dass** das Förderelement (10) ein Zahnriemen mit im Wesentlichen ebener Außenseite ist.

13. Transporteur nach wenigstens einem der vorhergehenden Ansprüche, **dadurch gekennzeichnet, dass** zumindest die Behälterverschluss-Transportlänge des Endlos-Steigförderers (9) Abdeckungen (12, 13) an den offenen Seiten und an den offenen Außenseiten der Taschen (18) aufweist.

## Claims

1. A conveyor apparatus (T) for container closures (V), comprising an ascending endless conveyor (9) placed in an ascending plain (E) and provided with entraining elements (M, M') on its conveyor element (10) that runs over lower and upper deflection means (14, 15), the entraining elements (M, M'), which are arranged with a substantially regular pitch projecting from the outer side of the conveyor element (10) and defining pockets (18) for the container closures (V), further comprising at least one feed path (7) located close to the lower deflection means (14) and delivering the container closures in a continuous line with a downward component of movement (K1) to the pockets (18), an outlet area (19) of the feed path (7) being situated close to the lower deflection means, the conveying direction of the conveying element (10) being directed downwards at the outlet area (19) of the feed path (7), and still further comprising at least one discharge area (11) above the feed path (7), **characterised in that** each entraining element (M, M') is dislocatable and/or deformable in an elastically resetting manner from its position substantially perpendicular to the outer side of the conveyor element (10) at least in and opposite to the conveying direction (16) of the conveyor element (10) and relative to said conveyor element (10), and that each entraining element (M) advances with its outer end (21, 21') in the conveying direction (16) relative to its root area (22) at least in the outlet area (19) of the feed path (7) for generating a parting-off effect to separate the frontmost container closure (V) from the line of container closures (V) supplied out of the feed path (7) without interruptions.

2. Conveyor apparatus according to claim 1, **characterised in that** the entraining element (M) projects from the conveyor element (10) at an acute angle (α) in such a way that, in the non-deformed and/or non-dislocated condition of the entraining element (M), the outer end (21') of the entraining element (M') advances in conveying direction (16), relative to the root area (22) of the entraining element (M'), which root area (22) is situated near, at or in the conveyor element (10).

3. Conveyor apparatus according to claim 1, **characterised in that** an axis (X1) of the ascending endless conveyor includes the deflection means (14, 15) and is inclined, relative to a vertical plane, from the bottom to the top towards the side at which the feed path (7) is arranged.

4. Conveyor apparatus according to claim 1, **characterised in that** the conveyor element (10) is deflected at least in a section and at the outlet area (19) of the feed path (7), and optionally at the discharge area (11), relative to a vertical plane such that it - where deflected - forms an oblique angle with the vertical plane.

5. Conveyor apparatus according to claim 1, **characterised in that** the feed path (7) extends from above at an acute angle (β < 90°) relative to a tangent (20) applied to the path of movement of the outer ends (21, 21') of the entraining elements (M), the acute angle (β) amounting to between 30° and 60°, preferably to about 45°.

6. Conveyor apparatus according to at least one of the preceding claims, **characterised in that** the entraining element (M, M')) is a substantially planar plate (P) which consists either of an elastically deformable material like preferably rubber or elastomeric material having a Shore-A hardness between about 40 - 90, preferably between about 60 - 70, or of spring steel.

7. Conveyor apparatus according to claim 6, **characterised in that** the plate (P) is glued onto the conveyor element (10) in the root area (22) of the entraining element (M, M').

8. Conveyor apparatus according to claim 7, **characterised in that** the plate (P) of elastic deformable material has a thickness of about 3 mm to 7 mm, preferably 4 mm to 6 mm.

9. Conveyor apparatus according to claim 6, **characterised in that** the plate (P) is releasably fixed at least at the root area (22) to a support which is secured in position on the conveyor element (10), preferably, is threaded, pinned, riveted or clinched to a boss (32) glued to the conveying element (10).

10. Conveyor apparatus according to at least one of the preceding claims, **characterised in that** the width and/or the angle (β) of the feed path (7) is adjustable.

11. Conveyor apparatus according to at lest one of the preceding claims, **characterised in that** the discharge area (11) is implemented analogously and inversely to the feed path (7) and is placed behind the upper deflection means (15), when seen in the conveying direction (16), in such a way that container closures (V) are discharged from the pockets (18) under the force of gravity and/or assisted with pressurised air with a movement component (K2) which has the same sense there as the downwardly situated conveying direction (16).

12. Conveyor apparatus according to claim 1, **characterised in that** the conveying element (10) is a toothed belt having a substantially planar outer side.

13. Conveyor apparatus according to at least one of the preceding claims, **characterised in that** at least the container closure conveying length of the endless ascending conveyor (9) is provided with covers (12, 13) at both open sides and at the open outer sides of the pockets (18).

## Revendications

1. Transporteur (T) pour couvercles de récipient (V), avec un convoyeur ascendant sans fin (9) qui est placé dans un plan montant (E) et dont l'élément convoyeur (10) qui passe sur des dispositifs de renvoi inférieur et supérieur (14, 15) présente des organes d'entraînement (M, M') qui dépassent de son côté extérieur au moins globalement perpendiculairement audit élément convoyeur, qui présentent un écartement globalement régulier et qui définissent des poches (18) pour des couvercles de récipient (V), au moins une voie d'amenée (7) qui amène les couvercles de récipient (V), en ligne, jusqu'aux poches (18) avec une composante de déplacement (K1) vers le bas et dont la zone d'ouverture (19) est située près du dispositif de renvoi inférieur (14), étant précisé que le sens de transport (16) de l'élément convoyeur (10) dans la zone d'ouverture (19) de la voie d'amenée (7) est dirigé vers le bas, et au moins une zone d'évacuation (11) au-dessus de la voie d'amenée (7), **caractérisé en ce que** chaque organe d'entraînement (M, M'), à partir de la position au moins approximativement perpendiculaire au côté extérieur de l'élément convoyeur (10), est apte à être déplacé avec rappel élastique et/ou déformé au moins dans le sens de transport (16) et/ou en sens inverse et par rapport à l'élément convoyeur (10), et **en ce que** chaque organe d'entraînement (M, M'), au moins dans la zone d'ouverture (19) de la voie d'amenée (7), pour séparer avec une action de saignée le couvercle de récipient (V) avant de la rangée de couvercles (V) qui est fournie sans interruption par ladite voie d'amenée (7), se déplace avec son extrémité extérieure (21, 21') en avant par rapport à sa zone de base (22), dans le sens de transport (16).

2. Transporteur selon la revendication 1, **caractérisé en ce que** l'organe d'entraînement (M') est incliné sur l'élément convoyeur (10) dans le sens de transport (16), avec un angle aigu (α), de telle sorte que l'extrémité extérieure (21') de l'organe d'entraînement (M'), en position non déplacée et/ou non déformée dudit organe d'entraînement (M') se déplace en avant, dans le sens de transport (16), par rapport à sa zone de base (22) située près ou au niveau de l'élément convoyeur (10) ou dans celui-ci.

3. Transporteur selon la revendication 1, **caractérisé en ce qu'**un axe (X1) du convoyeur ascendant sans fin (9) qui contient les dispositifs de renvoi (14, 15) est incliné du bas vers le haut, vers le côté, par rapport à une verticale sur laquelle est disposée au moins la voie d'amenée (7) vers le convoyeur ascendant sans fin (9).

4. Transporteur selon la revendication 1, **caractérisé en ce que** l'élément convoyeur (10), au moins par tronçons et dans la zone d'ouverture (19) de la voie d'amenée (7) et éventuellement dans la zone d'évacuation (11), est dévié de manière inclinée par rapport à une verticale dans le sens de transport (16).

5. Transporteur selon la revendication 1, **caractérisé en ce que** la voie d'amenée (7) s'étend à partir du haut suivant un angle aigu (β<90°) par rapport à une tangente (20) à la trajectoire des extrémités extérieures (2, 21') des organes d'entraînement (M, M'), étant précisé que l'angle (β) est de 30° à 60°, de préférence d'environ 45°.

6. Transporteur selon l'une au moins des revendications précédentes, **caractérisé en ce que** l'organe d'entraînement (M, M') est constitué par une plaque (P) globalement plane en soi, en matériau déformable élastiquement, de préférence composée de caoutchouc, d'un élastomère comme par exemple du polyuréthanne, avec une dureté Shore d'environ 40 à 90, de préférence d'environ 60 à 70, ou d'une tôle en acier à ressorts.

7. Transporteur selon la revendication 6, **caractérisé en ce que** la plaque (P) est collée à l'élément convoyeur (10) dans la zone de base (22) de l'organe d'entraînement (M, M').

8. Transporteur selon la revendication 7, **caractérisé en ce que** la plaque (P) en matériau déformable élastiquement a une épaisseur d'environ 3 mm à 7 mm, de préférence de 4 mm à 6 mm.

9. Transporteur selon la revendication 7, **caractérisé en ce que** la plaque (P), dans la zone de base (22), est fixée de manière amovible à une butée fixée à l'élément convoyeur (10), et est de préférence vissée, chevillée, rivetée ou encliquetée sur une bosse (32) collée à l'élément convoyeur.

10. Transporteur selon l'une au moins des revendications précédentes, **caractérisé en ce que** la largeur et/ou l'angle (β) de la voie d'amenée (7) sont réglables.

11. Transporteur selon l'une au moins des revendications précédentes, **caractérisé en ce que** la zone d'évacuation (11) est conçue de manière analogue et inversée par rapport à la voie d'amenée (7) et est placée derrière le dispositif de renvoi supérieur (15), dans le sens de transport (16), de telle sorte que les couvercles de récipient (V) soient évacués des poches (18), par gravité et/ou avec l'aide d'air comprimé, à l'aide d'une composante de déplacement (K2) de même sens que le sens de transport (16) orienté à cet endroit vers le bas.

12. Transporteur selon la revendication 1, **caractérisé en ce que** l'élément convoyeur (10) est constitué par une courroie dentée avec un côté extérieur globalement plan.

13. Transporteur selon l'une au moins des revendications précédentes, **caractérisé en ce que** la longueur de transport de couvercle de récipient, au moins, du convoyeur ascendant sans fin (9) présente des recouvrements (12, 13) sur les côtés ouverts et sur les côtés extérieurs ouverts des poches (18).
